# EUROPÄISCHE PATENTANMELDUNG

(11) **EP 1 579 753 A1**
(43) Veröffentlichungstag der Anmeldung: **28.09.2005**
(21) Anmeldenummer: 05005944.3
(22) Anmeldetag: 18.03.2005
(51) Int. Cl.: A01C 17/00, A01C 7/10

(54) **Schleuderdüngerstreuer**

(30) Priorität: 25.03.2004 DE 102004014571
(71) Anmelder: Amazonen-Werke H. Dreyer GmbH & Co. KG, 49205 Hasbergen (DE)
(72) Erfinder: Scheufler, Bernd, Dr., 49205 Hasbergen (DE); Marquering, Johannes, Dr., 49176 Borgloh (DE)

(57) **Zusammenfassung**

Schleuderdüngerstreuer (1) mit zumindest einer von einer Kraftquelle rotierend angetriebenen und mit Wurfschaufeln (6) besetzten Schleuderscheibe (5), der die auszubringenden Düngerpartikel in einstellbaren Mengen über zumindest ein mittels eines Einstellorgans (8) einstellbares Dosierorgan (4) zugeführt werden und die die Düngerpartikel in Breitverteilung auf der Bodenoberfläche verteilt, und Einstellelementen (15) zur einstellbaren Bestimmung des Aufgabeortes (17) der Düngerpartikel auf die Schleuderscheiben (5) vorgesehen sind. Um aufgrund eines oder mehrere einfach zu ermittelnder Düngerparameter einen automatisch auf den jeweiligen Dünger einzustellenden Düngerstreuer zur Erzielung einer guten Querverteilung zu schaffen, ist vorgesehen, dass zumindest eine elektronische Wiegeeinrichtung (12) zur Erfassung der pro Zeit- und/oder Flächeneinheit ausgebrachten Düngermenge und zumindest eine elektronische Sensorvorrichtung (14) zur punktuellen Ermittlung von physikalischen Daten über die Düngerverteilung der abgeschleuderten Düngerpartikel in Bezug auf den Sektorwinkel vorgesehen ist.

## Beschreibung

Die Erfindung betrifft einen Schleuderdüngerstreuer gemäß des Oberbegriffes des Patentanspruches 1.

Ein derartiger Schleuderdüngerstreuer ist beispielsweise in der EP 02 98 549 B1 beschrieben. Mittels der rotierend angetriebenen Schleuderscheibe und der darauf angeordneten Wurfschaufeln wird das der Schleuderscheibe zudosierte Material in Breitverteilung auf der Bodenoberfläche verteilt. Außerhalb der Umlaufbahnen der äußeren Enden der Wurfschaufeln sind oberhalb der Schleuderscheibe Sensoren angeordnet, um die Verteilung des Gutes zu messen, das während des Betriebes des Schleuderdüngerstreuers in einem Streufächer ausgestreut wird. Die ausgestreute Gutmenge kann auf einer Anzeigevorrichtung angezeigt werden. Mittels einer elektronischen Auswerteeinrichtung kann entsprechend der von den Sensoren gelieferten Daten die gewünschte Verteilung eingestellt werden, um so die Größe der Dosieröffnung automatisch zu steuern.

Ein weiterer Schleuderdüngerstreuer ist in der WO 95/24823 beschrieben. Hierbei sind an dem Schleuderdüngerstreuer oder an den Wurfschaufeln Messvorrichtungen angeordnet, um die Düngerverteilung so wie Verteilgenauigkeit mittels eines elektronischen Rechners zu errechnen. Aufgrund der ermittelten Düngerverteilung so wie Verteilgenauigkeit kann nach vorgegebenen Grenzwerten der Düngerstreuer eingestellt werden.

Der Erfindung liegt die Aufgabe zugrunde, aufgrund eines oder mehrerer einfach zu ermittelnder Düngerparameter einen automatisch auf den jeweiligen Dünger einzustellenden Düngerstreuer zur Erzielung einer guten Querverteilung zu schaffen.

Diese Aufgabe wird erfindungsgemäß durch die kennzeichnenden Merkmale des Patentanspruches 1 gelöst. Infolge dieser Maßnahmen wird mittels der elektronischen Wiegevorrichtung die tatsächlich ausgebrachte Düngermenge pro Zeit und Flächeneinheit erfasst. Es wird also die ausgebrachte Düngermenge auf direktem Wege, und nicht wie im Stand der Technik durch indirekte Messungen und Berechnungen ermittelt. Des weiteren wird im Gegensatz zum Stand der Technik nicht mittels der Sensoren der gesamte Streufächer erfasst, sondern es wird quasi eine punktuelle bzw. ausschnittsweise Ermittlung der physikalischen Daten über die Düngerverteilung in Bezug auf einen Sektorwinkel oder Sektorwinkelbereich des Streufächers vorgenommen. Hierdurch ist eine wesentlich einfacherere Sensorvorrichtung und Messvorrichtung mit einer entsprechenden Auswertung im Gegensatz zum Stand der Technik zu verwenden. Mit anderen Worten ausgedrückt, es wird mit einfachsten Messvorrichtungen eine sehr genaue Aussage über die Qualität der Einstellung des Düngerstreuers in Bezug auf die Ausbringmenge und Querverteilung erreicht.

Eine schnelle Auswertung der von der Sensorvorrichtung und der Wiegevorrichtung ermittelten Werte wird dadurch erreicht, dass in dem Speicher des elektronischen Bordrechners ein Auswerteprogramm und eine Datenbank mit Vergleichsdaten hinterlegt ist. Hierbei wird auf in Versuchsreihen ermittelten Werten zurückgegriffen.

Um mit der einfachen erfindungsgemäßen Sensorvorrichtung trotz der punktuellen oder ausschnittweisen Erfassung des Streufächers einen großen Bereich des Streusektors und die Querverteilung über einen großen Bereich des Streusektors entsprechende Aussagen treffen zu können, ist vorgesehen, dass die Einstellelemente zur einstellbaren Bestimmung des Aufgabeortes der Düngerpartikel auf die Schleuderscheiben derart verstellbar sind, dass der Streufächer der abgeschleuderten Düngerpartikel um zumindest 30° verschwenkbar ist. Infolge dieser Maßnahmen wird der Streufächer ganz oder teilweise durch den Messbereich des fest am Düngerstreuer angeordneten Sensorelementes geschwenkt.

In einfacher Weise lässt sich diese Verschwenkung dadurch erreichen, dass der gesamte Streufächer durch Verlegung oder Verlagerung des Aufgabeortes der Düngerpartikel auf der Schleuderscheibe durch den Erfassungsbereich der Sensorvorrichtung schwenkbar ist.

In einer Ausgestaltung der Erfindung kann die Sensorvorrichtung als Bilderkennungssensor ausgebildet sein. Mittels des Bilderkennungssensors können die Parameter der abgeschleuderten Düngemittelpartikel erkannt werden. Aus diesen Parametern kann auf die Qualität der Querverteilung geschlossen werden. Hierbei können mittels des Bildsensors der Korndurchmesser, Abflugwinkel, Abflugrichtung oder Abfluggeschwindigkeit ermittelbar sein. Diese aktuell ermittelten Daten werden mit den in der Datenbank hinterlegten Vergleichsdaten verglichen. Aus diesem Vergleich können Rückschlüsse auf die tatsächliche Qualität der Querverteilung gezogen werden und hieraus entsprechende Einstell- und Korrekturparameter errechnet werden.

Des weiteren kann mittels der Sensorvorrichtung der Volumenstrom oder Massenstrom der Düngemittelpartikel erkennbar sein.

Als weiterer Parameter kann das Schüttgewicht des auszubringenden Düngemittels ermittelt werden. Dies kann mittels geeigneter Sensoren oder mit einer von Hand zu bedienenden Messvorrichtung im Vorfeld des Ausbringvorganges gemacht werden, wobei dann dieser Messwert mittels geeigneter Eingabevorrichtung von Hand oder in automatischer Weise in den Bordrechner eingegeben wird.

Um Rückschlüsse aus den aktuell von der Sensorvorrichtung ermittelten Daten auf die tatsächliche Ausbringmenge und Verteilgenauigkeit zu erhalten, ist vorgesehen, dass aus den Daten der tatsächlich ausgebrachten Düngermenge im Vergleich zu einem hinterlegten "normalen Ausfließverhalten" ein Kalibrierungsfaktor, der ein Maß für die aktuelle Verteil- und/oder Ausbringgenauigkeit ist, aufgrund eines hinterlegten Auswerteprogramms ermittelbar ist. Hierdurch wird eine große "Mengentreue" bei der Ausbringmenge des Düngers durch den Schleuderdüngerstreuer gewährleistet.

Eine automatische Einstellung des Düngerstreuers aufgrund der von der Sensoreinrichtung und Wiegeeinrichtung ermittelten Daten zu schaffen, ist vorgesehen.

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in perspektivischer Darstellung und in Prinzipdarstellung,
- Fig. 2: den Schleuderdüngersteuer in Seitenansicht mit Wiegeeinrichtung,

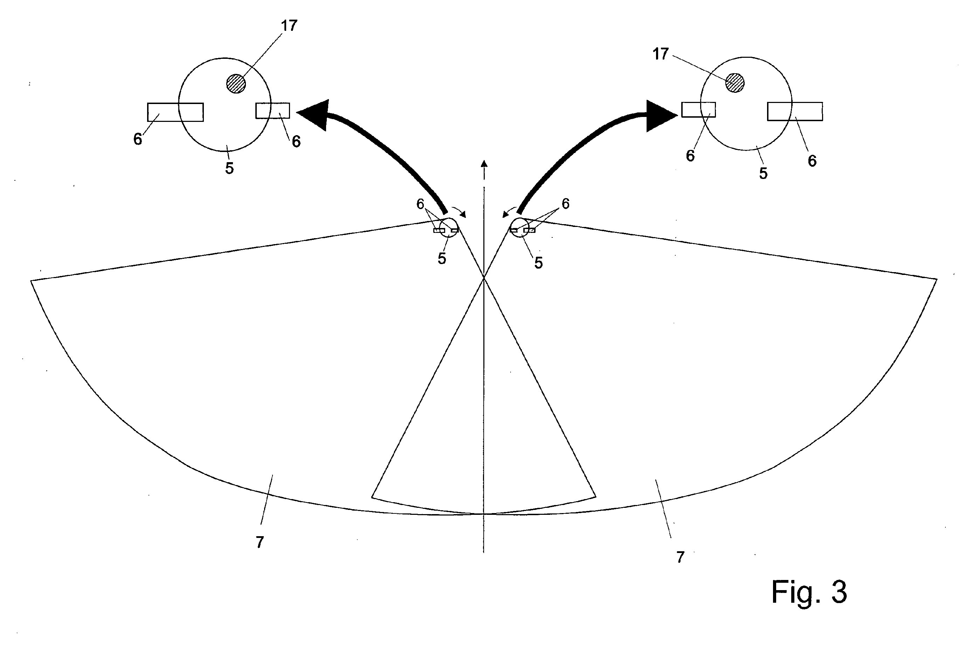

- Fig. 3: die von den Schleuderscheiben der Schleuderstreuer erzeugten Streufächer mit Überlappung in der Draufsicht und in Prinzipdarstellung,
- Fig. 4: den durch Verlagerung des Aufgabepunktes verschwenkten Streufächer in einer Zwischenposition in Prinzipdarstellung,
- Fig. 5: den weiter verschwenkten Aufgabepunkt mit dem sich daraus ergebenen verschwenkten Streufächer in Prinzipdarstellung,
- Fig. 6: den durch Verlagerung des Aufgabepunktes in die andere Richtung verschwenkten Streufächer in einer Zwischenposition in Prinzipdarstellung und
- Fig. 7: den weiter gegenüber der Darstellung in Fig. 6 verschwenkten Aufgabepunkt mit dem sich daraus ergebenen verschwenkten Streufächer in Prinzipdarstellung.

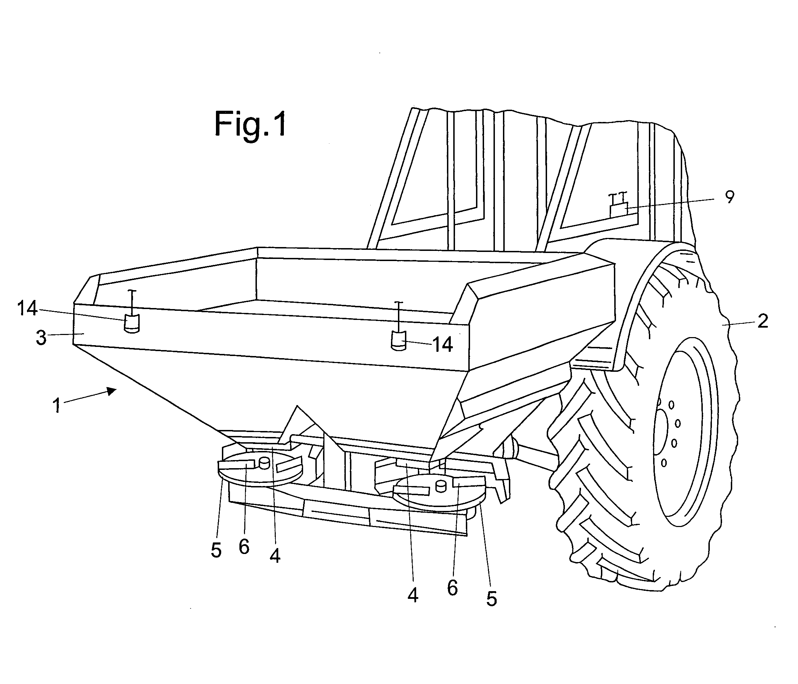

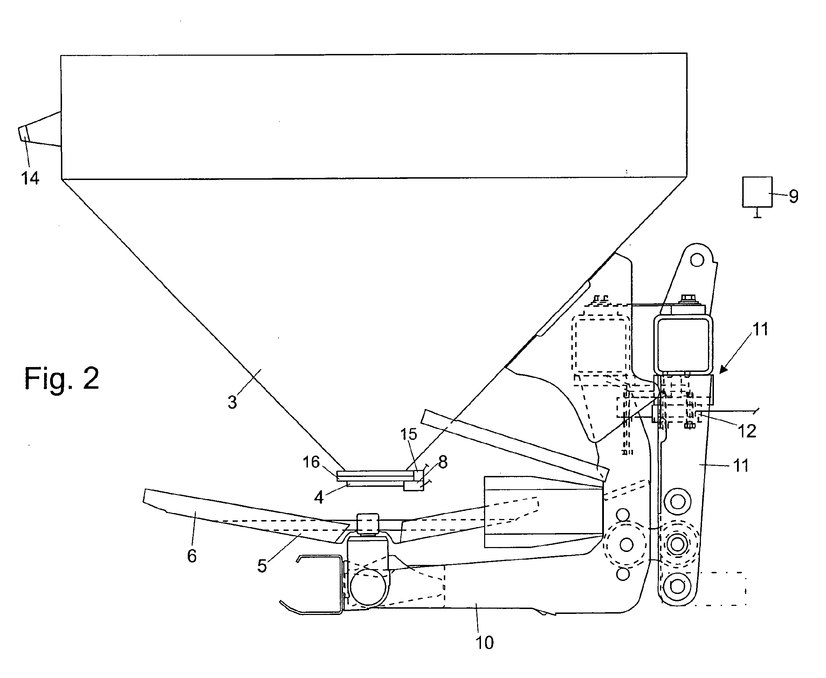

Der Schleuderdüngerstreuer 1 gemäß Fig. 1 und 2 ist an den Dreipunkkraftheber eines Ackerschleppers 2 angeordnet. Der Schleuderdüngerstreuer 1 weist den Vorratsbehälter 3 auf, in dessen unteren Bereich die beiden Dosierorgane 4 angeordnet sind. Unterhalb der Dosierorgane 4 sind die Schleuderscheiben 5 mit den einstellbaren Wurfelementen 6 angeordnet. Die Schleuderscheiben 5 werden mittels einer Kraftquelle rotierend angetrieben und der Dünger wird von den Wurfschaufeln 6 in Form eines Streufächers 7 in Breitverteilung abgeworfen und auf der Bodenoberfläche verteilt. Die Dosierorgane 4 weisen die Einstellmittel 8 auf, mittels derer die Menge Material, die den Schleuderscheiben 5 pro Zeiteinheit aus dem Vorratsbehälter 3 zugeführt wird, einstellbar ist. Die Einstellmittel 8 sind über geeignete Übertragungsmittel, beispielsweise Kabel mit dem Bordcomputer 9 verbunden. Des weiteren ist, wie Fig. 2 zeigt, zwischen dem Rahmen 10 des Vorratsbehälters 3 und der Dreipunktkupplung des Schleppers 2 eine einen Wiegerahmen 11 aufweisende Wiegeeinrichtung 11 angeordnet. Dieser Wiegerahmen 11 weist das Wiegeelement 13 auf. Dieses Wiegeelement 13 ist ebenfalls mit dem Bordcomputer 9 verbunden. Über diese Wiegeeinrichtung 12 kann in bekannter und daher nicht näher erläuterter Weise das sich in dem Vorratsbehälter 3 befindliche Material bzw. die in Zeitintervallen ausgebrachte Materialmenge pro Zeit- und/oder Flächeneinheit mittels eines Wiegevorganges in bekannter Weise ermittelt werden.

Im hinteren Bereich des Düngerstreuers 1 sind die beiden Sensoren 14 der elektronischen Sensorvorrichtung angeordnet, welche einen Teilbereich oder Ausschnitt des zugeordneten Streufächers, der von jeder Streuscheibe 5 abgeschleudert wird, quasi "punktuell" abtasten. Jeder Schleuderscheibe 5 ist im Ausführungsbeispiel also ein Sensor 14 zugeordnet. Diese Sensoren 14 sind jeweils über Kabel mit dem Bordcomputer 9 verbunden. Die Sensoren 14 erfassen punktuell physikalische Daten über die Düngerverteilung der abgeschleuderten Düngerpartikel in dem Streufächer 14in Bezug auf den Sektorwinkel.

In dem Speicher des elektronischen Bordrechners 9 ist ein Auswerteprogramm und eine Datenbank mit Vergleichsdaten hinterlegt. Aus den Daten der tatsächlich ausgebrachten Düngermenge, die durch die Wiegeeinrichtung 12 ermittelt wird, ist im Vergleich zu einem hinterlegten "normalen Ausfließverhalten" des von den Dosierorganen 4 dosierten Materiales ein Kalibrierungsfaktor, der ein Maß für die aktuelle Verteil- und/oder Ausbringgenauigkeit ist, aufgrund eines hinterlegten Auswerteprogramms, wie erwähnt, ermittelbar.

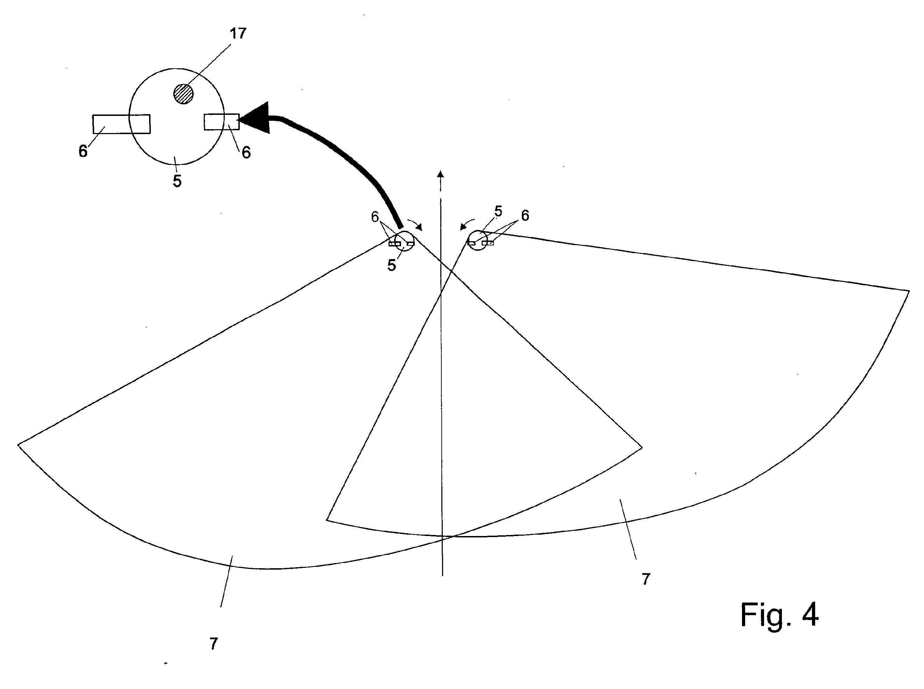

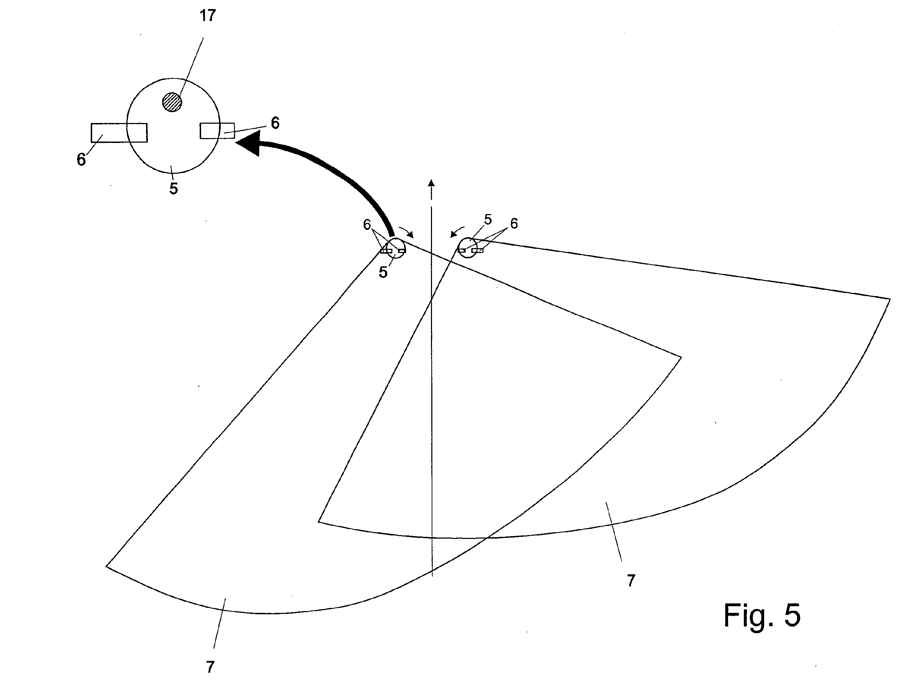

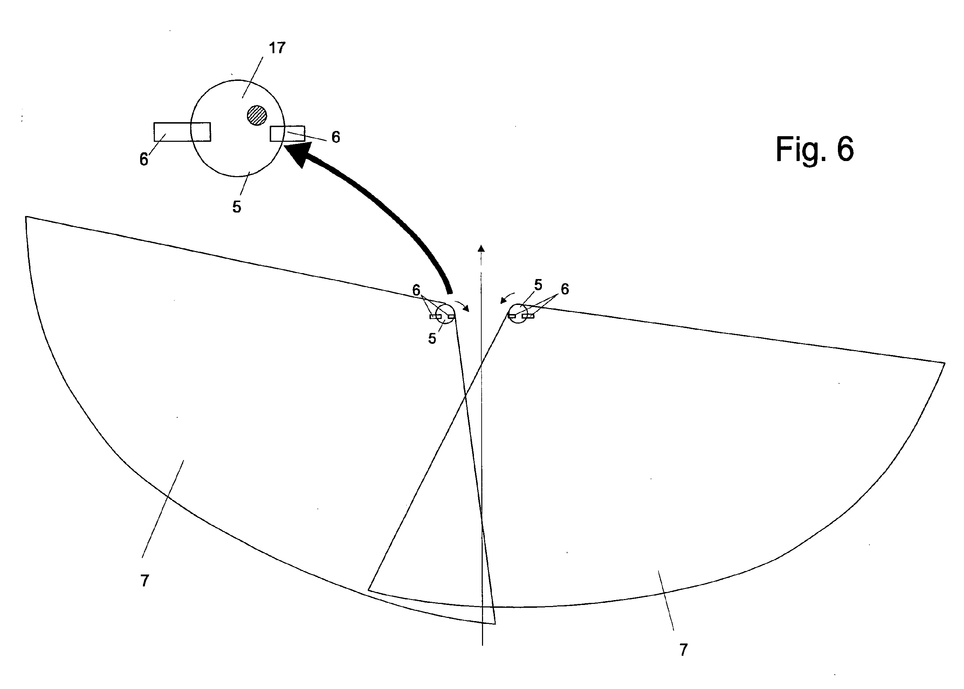

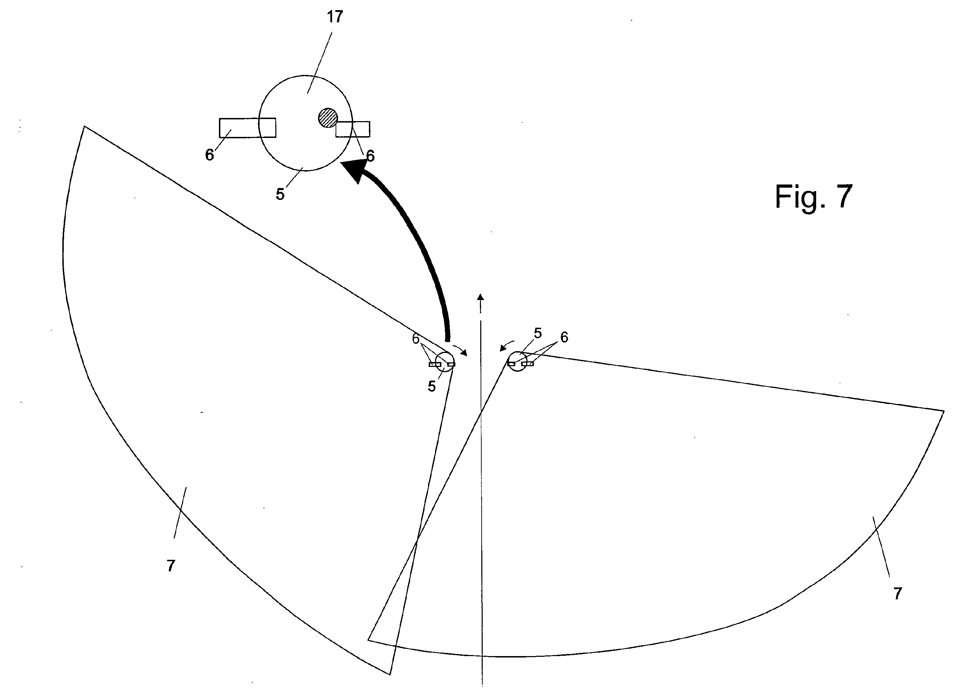

Mittels der Sensoren 14 der Sensorvorrichtung wird der Streufächer 7 punktuell abgetastet. Hierbei ist der Sensor 14 der Sensorvorrichtung unverschwenkbar an dem Schleuderdüngerstreuer angeordnet. Um dennoch einen großen Bereich oder den gesamten Bereich des Streufächers 7 abtasten zu können, sind mittels der einstellbaren Einstellelemente 15 die Bauteile 16 der Dosierorgane 4, die für die Bestimmung des Aufgabeortes 17 der Düngerpartikel auf die Schleuderscheiben 5 verantwortlich sind, derart verstellbar, dass der jeweilige Streufächer 7 der abgeschleuderten Düngemittelpartikel verschwenkbar ist. Verschiedene verschwenkte Positionen des linken Streufächers 7 aufgrund der Verlagerung des Aufgabeortes 17 durch Verstellung der Bauteile 16 sind in den Fig. 4 bis 7 dargestellt. Mittels der Einstellelemente 15 können die Bauteile 16, die für die Bestimmung der Aufgabefläche bzw. Aufgabeortes 17 der Düngerpartikel auf die Schleuderscheibe 5 verstellt werden. Hierdurch kann der gesamte oder ein Teil des Streufächers 7 durch den Erfassungsbereich des jeweiligen Sensors 14 der Sensorvorrichtung geschwenkt werden. Der Streufächer 7 kann zumindest um 30° verschwenkt werden. Diese Werte werden von dem Sensor 14 in Abhängigkeit des Verschwenkungswinkels der für den Aufgabeort 17 des Düngers auf den Schleuderscheiben 5 bestimmenden Bauteile 16 mittels eines Winkelerfassungssensors oder eines anderen geeigneten Verfahrens an das Auswerteprogramm des Bordrechners 9 übermittelt.

Der Sensor 14 der Sensorvorrichtung kann als Bilderkennungssensor aufgebildet sein. Dieser Bilderkennungssensor 14 kann die Parameter der abgeschleuderten Düngerpartikel ermitteln. Hierbei kann der Korndurchmesser, Abflugwinkel, Abflugrichtung oder Abfluggeschwindigkeit der Düngerpartikel aufgrund der von dem Sensor ermittelten Daten in Verbindung mit dem in dem Speicher des Bordrechners 9 hinterlegten Auswerteprogramms ermittelt werden. Auch ist es möglich, dass der Bilderkennungssensor 14 eine Kamera ist. Mittels der Sensorvorrichtungen ist der Volumenstrom und/oder Massenstrom der Düngerpartikel ermittelbar. Aus dem von der Sensorvorrichtung ermittelten punktuellen Ermittlung der physikalischen Daten über die Düngerverteilung der abgeschleuderten Düngerpartikel in Bezug auf den Sektorwinkel lässt sich trotz des feststehenden Sensors 14 und nur einer ausschnittsweisen oder punktuellen Erfassung des Streufächers 7 eine Aussage über die Qualität der Querverteilung des Düngers treffen.

Aufgrund dieser ermittelten Daten werden die Einstellorgane 8 der Dosiervorrichtung 4 und die für die Bestimmung des Aufgabeortes 17 der Düngerpartikel auf der Schleuderscheibe 5 maßgeblichen Bauteile 16 zugeordneten Einstellelemente 15 von dem Bordrechner 9 angesteuert, so dass sich eine optimale bzw. optimierte Querverteilung des Dünger ergibt. Somit ergibt sich also ein selbständig einstellender Düngerstreuer, um die gewünschte gleichmäßige Düngerverteilung auf dem zu bestellenden Feld zu gewährleisten.

## Patentansprüche

1. Schleuderdüngerstreuer mit zumindest einer von einer Kraftquelle rotierend angetriebenen und mit Wurfschaufeln besetzten Schleuderscheibe, der die auszubringenden Düngerpartikel in einstellbaren Mengen über zumindest ein mittels eines Einstellorgan einstellbares Dosierorgan zugeführt werden und die die Düngerpartikel in Breitverteilung auf der Bodenoberfläche verteilt, und Einstellelementen zur einstellbaren Bestimmung des Aufgabeortes der Düngerpartikel auf die Schleuderscheiben vorgesehen sind, **dadurch gekennzeichnet, dass** zumindest eine elektronische Wiegeeinrichtung (12) zur Erfassung der pro Zeit- und/oder Flächeneinheit ausgebrachten Düngermenge und zumindest eine elektronische Sensorvorrichtung (14) zur punktuellen Ermittlung von physikalischen Daten über die Düngerverteilung der abgeschleuderten Düngerpartikel in Bezug auf den Sektorwinkel vorgesehen ist.

2. Schleuderdüngerstreuer nach Anspruch 1, **dadurch gekennzeichnet, dass** in dem Speicher des elektronischen Bordrechners (9) ein Auswerteprogramm und eine Datenbank mit Vergleichsdaten hinterlegt sind.

3. Schleuderdüngerstreuer nach Anspruch 1, **dadurch gekennzeichnet, dass** die Einstellelemente (15) zur einstellbaren Bestimmung des Aufgabeortes (17) der Düngerpartikel auf die Schleuderscheiben (5) derart verstellbar sind, dass der Streufächer (7) der abgeschleuderten Düngerpartikel um zumindest 30° verschwenkbar ist.

4. Schleuderdüngerstreuer nach Anspruch 3, **dadurch gekennzeichnet, dass** der gesamte Streufächer (7) durch Verlegung des Aufgabeortes (17) der Düngerpartikel auf der Schleuderscheibe (5) durch den Erfassungsbereich der Sensorvorrichtung (14) schwenkbar ist.

5. Schleuderdüngerstreuer nach einem oder mehreren der vorstehenden Ansprüche, **dadurch gekennzeichnet, dass** zumindest ein Bilderkennungssensor (14) vorgesehen ist.

6. Schleuderdüngerstreuer nach einem oder mehreren der vorstehenden Ansprüche, **dadurch gekennzeichnet, dass** mittels des Bilderkennungssensors (14) die Parameter der abgeschleuderten Düngerpartikel ermittelbar sind.

7. Schleuderdüngerstreuer nach einem oder mehreren der vorstehenden Ansprüche, **dadurch gekennzeichnet, dass** mittels des Bildsensors (14) der Korndurchmesser, Abflugwinkel, Abflugrichtung und/oder Abfluggeschwindigkeit ermittelbar sind.

8. Schleuderdüngerstreuer nach Anspruch 5, **dadurch gekennzeichnet, dass** der Bilderkennungssensor (14) eine Kamera ist.

9. Schleuderdüngerstreuer nach einem oder mehreren der vorstehenden Ansprüche, **dadurch gekennzeichnet, dass** mittels der Sensorvorrichtung (14) der Volumenstrom und/oder Massenstrom der Düngerpartikel ermittelbar ist.

10. Schleuderdüngerstreuer nach einem oder mehreren der vorstehenden Ansprüche, **dadurch gekennzeichnet, dass** mittels geeigneter Sensoren das Schüttgewicht des auszubringenden Düngers ermittelbar ist.

11. Schleuderdüngerstreuer nach einem oder mehreren der vorstehenden Ansprüche, **dadurch gekennzeichnet, dass** aus den Daten der tatsächlich ausgebrachten Düngermenge im Vergleich zu einem hinterlegten "normalen Ausfließverhalten" ein Kalibrierungsfaktor, der ein Maß für die aktuelle Verteil- und/oder Ausbringgenauigkeit ist, aufgrund eines hinterlegten Auswerteprogramms ermittelbar ist.

12. Schleuderdüngerstreuer nach einem oder mehreren der vorstehenden Ansprüche, **dadurch gekennzeichnet, dass** aufgrund der ermittelten Daten die Einstellelemente (15), die den die Verteilgenauigkeit bestimmenden Bauteilen (16) des Streuers zugeordnet sind, von dem elektronischen Bordrechner (9) zur Einstellung einer optimalen Verteilgenauigkeit angesteuert werden.
